# EUROPEAN PATENT APPLICATION

(11) **EP 4 730 103 A1**
(43) Date of publication of application: **22.04.2026**
(21) Application number: 25154129.8
(22) Date of filing: 27.01.2025
(51) Int. Cl.: G06F 7/58, H01L 23/00, H01S 5/02257

(54) **QUANTUM RANDOM NUMBER GENERATOR (QRNG) PACKAGING SOLUTIONS**

(30) Priority: 15.10.2024 US 202418916610
(71) Applicant: II-VI Delaware, Inc., Wilmington, DE 19890 (US)
(72) Inventor: O'DANIEL, Jason, Wilmington, 19890 (US); SCHIATTONE, Francesco, Wilmington, 19890 (US); LIU, Hong-Zhi, Wilmington, 19890 (US); CHEN, Justin, Wilmington, 19890 (US); BOUCART, Julien, Wilmington, 19890 (US)
(74) Representative: Schmidt, Christian

(57) **Abstract**

An optical device may be configured for use in quantum random number generation. The optical device may include an optical source configured to emit a light beam; a photodetector configured to detect light; and a polarizer disposed between the optical source and the photodetector, where the polarizer is configured to selectively pass light having a particular polarization. The optical device may include a packaging that includes, at least, the optical source, the photodetector, and the polarizer. The polarizer is configured to selectively pass the light beam when it has a polarization matching the particular polarization. The optical device includes one or more mitigating features for mitigating light feedback into the optical source. The optical device is configured for use in facilitating or enabling quantum random number generation (QRNG) based on detection of the light beam by the photodetector.

## Description

### TECHNICAL FIELD

Aspects of the present disclosure relate to random number generation for use in cryptography and computation applications. More specifically, various implementations based on the present disclosure relate to methods and systems for implementing and utilizing quantum random number generator (QRNG) packaging solutions.

### BACKGROUND

Limitations and disadvantages of conventional random number generation solutions will become apparent to one of skill in the art, through comparison of such systems with some aspects of the present disclosure as set forth in the remainder of the present application with reference to the drawings.

### BRIEF SUMMARY

System and methods are provided for Quantum random number generator (QRNG) Packaging Solutions, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF THE DRAWINGS

Fig. 1 illustrates an example vertical-cavity surface-emitting laser (VCSEL) based quantum random number generator (QRNG) device.
Fig. 2 illustrates another example vertical-cavity surface-emitting laser (VCSEL) based quantum random number generator (QRNG) device.
Fig. 3 illustrates another example vertical-cavity surface-emitting laser (VCSEL) based quantum random number generator (QRNG) device.
Fig. 4 illustrates another example vertical-cavity surface-emitting laser (VCSEL) based quantum random number generator (QRNG) device.
Fig. 5 illustrates another example vertical-cavity surface-emitting laser (VCSEL) based quantum random number generator (QRNG) device.
Fig. 6 illustrates another example vertical-cavity surface-emitting laser (VCSEL) based quantum random number generator (QRNG) device.
Fig. 7 illustrates another example vertical-cavity surface-emitting laser (VCSEL) based quantum random number generator (QRNG) device.
Fig. 8 illustrates stacking-type vertical-cavity surface-emitting laser (VCSEL) based quantum random number generator (QRNG) device.
Fig. 9 illustrates an example packaging incorporating a stacking-type vertical-cavity surface-emitting laser (VCSEL) based quantum random number generator (QRNG) device.

### DETAILED DESCRIPTION

The present disclosure is directed to optical devices related solutions. In particular, implementations based on the present disclosure are directed to creating low-cost packaging of quantum random number generation based systems or devices. In this regard, random number generation is a process by which one or more (e.g., sequence of) numbers or the like are generated in a manner where these numbers cannot be reasonably predicted, at least no better than when the numbers are generated by random. The random number generation is typically done using a random number generator (RNG). In this regard, random number generators may be hardware based components in which the random number generation may be performed or done based on and/or as a function of a current value of some attribute (e.g., physical attribute) that is constantly changing in a manner that is practically impossible to model. For quantum random number generation, the attribute used for the random number generation process may be quantum phenomena associated with and/or tracked in the component. Such component may be referred to as quantum random number generator (QRNG).

Solutions based on the present disclosure provide low-cost quantum random number generator packaging, particularly by use of a suitable light emitter component in conjunction with a simple polarization selection sub-component. For example, in various embodiments, low-cost quantum random number generator packaging may be provided by use of a sub-component based on vertical-cavity surface-emitting laser (VCSEL) polarization selection. In this regard, use of VCSELs may be advantageous due to the low cost of VCSELs and inherent desirable characteristics of light emissions by VCSELs. Nonetheless, while various embodiments are described herein as VCSEL based implementations, the disclosure is not limited to use of VCSELs, and any suitable light emitter component (e.g., edge-emitting laser) may be used so long as it may be configured to provide light emission with suitable polarization characteristics (e.g., non-strained emission).

As noted, in many instances VCSEL based designs may be used, as use of such VCSEL based designs may allow for mitigating laser feedback and/or may enable as much integration as possible. In this regard, single mode or low mode count VCSELs without any polarization stabilizing features may usually flip between polarizations at certain drive conditions. If such VCSEL is operated carefully at this point under pulsed conditions, the mode selection of polarization may be considered quantum in nature. The two polarizations are typically along the crystallographic axes of the VCSEL. The operating condition may be carefully tuned (e.g., via current level), such that the polarization selection may provide a 50/50 probability. Thus, utilizing a polarizer set at the correct orientation, followed by a photodetector (e.g., photodiode), may provide means of providing random quantum generated bits.

Solutions based on the present disclosure provide enhanced solutions for packaging of such configuration, particularly by incorporating such configuration into surface-mount technology (SMT) based packages. Various example embodiments based on the present disclosure may provide low-cost solutions for packaging of a VCSEL (or any suitable light emitter), a photodetector (PD) (e.g., photodiode), and a polarizer for use in a quantum random number generator (QRNG) system. Example embodiments may also incorporate means of feedback mitigation, to provide more stable operation of the VCSEL. Further, some example embodiments may also provide added levels of integration, such as by using a polarizer (e.g., wire grid polarizer) fabricated directly on the photodetector. Further integration may also be used in some embodiments, with more electronics (e.g., additional sensor electronics, such as a transimpedance amplifier, comparator, etc.) added within the package.

In various implementations, the proposed arrangement (combination) of a VCSEL, a PD, and a polarizer may be incorporated into opto-coupler double molding packaging. In this regard, such package may comprise a first molding and a second molding, with the first molding being transparent molding and the second molding being opaque, and with the first molding being, at least partially, disposed within and/or surrounded by the second molding. In various implementations, such opto-coupler double molding packaging may be used with a polarizer element, which may be placed in the first molding-e.g., in place of the polyimide, Kapton, or insulating tape. Such polarizer element may be a high temperature wire grid polarizer film or could be a wire grid polarizer fabricated on glass. The polarizer element may be placed and/or orientated in a particular manner-e.g., in relation to the two polarization axes from the VCSEL-such that one polarization may pass with the highest possible transmission and the other polarization may be blocked.

As noted, the polarization of the VCSEL may be used in facilitating quantum random number generation. This quantum random number generation operation may be upset, however, such as if there is too much laser feedback into the VCSEL cavity, and as such reflective or partially reflective surfaces at normal incidence to the VCSEL should be avoided. Accordingly, in various implementations, in order to mitigate issues with laser feedback, the polarizer and photodetector may be operated at an angle, which may prevent or reduce feedback into the VCSEL.

Example embodiments in accordance with the present disclosure, and details relating thereto, are illustrated in and described below with respect to the figures.

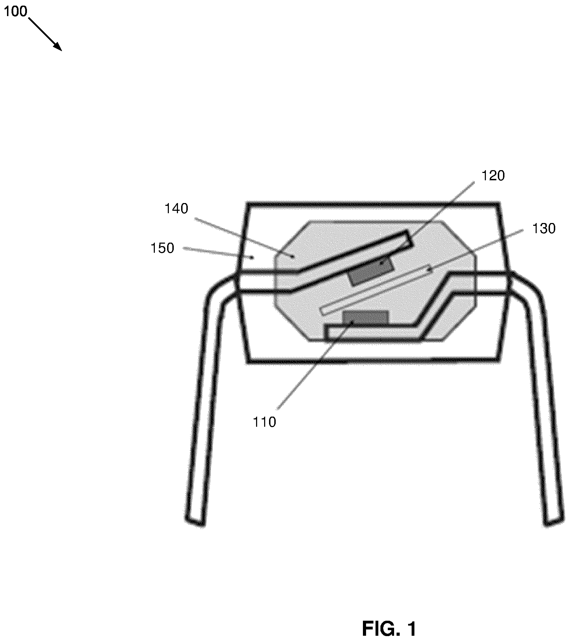

Fig. 1 illustrates an example vertical-cavity surface-emitting laser (VCSEL) based quantum random number generator (QRNG) device. Referring to Fig. 1, there is shown a vertical-cavity surface-emitting laser (VCSEL) based quantum random number generator (QRNG) device (referred to hereinafter simply as "device") 100.

As shown in the example embodiment illustrated in Fig. 1, the device 100 comprises a VCSEL 110, a photodetector (PD) 120, a polarizer 130, a transparent molding 140, and an opaque molding 150.

The VCSEL 110 may comprise a semiconductor laser diode-based structure, configured to provide laser beam emission perpendicularly from the top surface of the semiconductor structure. In this regard, various types of VCSEL may be used, and the disclosure is not limited to any particular type, and as such any suitable VCSEL may be used.

For example, the VCSEL 110 may comprise a distributed Bragg reflector (DBR) based structure, which may be configured to function as mirrors parallel to the top surface, with an active region comprising one or more quantum wells for the laser light generation in between. One DBR structure may be disposed on top of a substrate layer and heat sink layer. The planar DBR-mirrors may comprise layers with alternating high and low refractive index (RI) based material. The thickness of each layer may be set to yield high reflectivity. For example, a thickness of a quarter of the laser wavelength in the material may yield optical reflectivities above 99%. Use of high reflectivity may be used to balance short axial length of the gain region. In some implementations, p-type and n-type regions may be embedded between the DBR-mirrors, forming a diode junction. This may involve more complex semiconductor processing to ensure electrical contact to the active layer/region, but may eliminate electrical power loss in the DBR structure. Nonetheless, the disclosure is not limited to any particular VCSEL design or implementation, and any suitable design or implementation may be used.

The photodetector (PD) 120 may comprise suitable circuitry for detecting light or other electromagnetic radiation. In this regard, various mechanisms and/or techniques may be used in providing the detection functions provided by the photodetectors, such as using photoelectric or photochemical effects, spectral response, etc., and the disclosure is not limited to any particular type or mechanism. In an example implementation, the PD 120 may comprise a photodiode.

The polarizer 130 may comprise suitable material for providing polarization selection-that is, selectively passing or otherwise handling propagation of radiant energy, particularly light (e.g., laser emitted by the VCSEL 110) based on polarization, as described herein.

The transparent molding 140 may comprise suitable transparent material that may allow for propagation of radiant energy, particularly light (e.g., laser emitted by the VCSEL 110).

The opaque molding 150 may comprise suitable opaque material that may allow for blocking passage of radiant energy, particularly light (e.g., laser emitted by the VCSEL 110).

In example operation, the device 100 may be used in providing and/or supporting quantum random number generation. In this regard, during such operation the VCSEL 110 may emit light, which may propagate within the cavity within the device 110 filled with the transparent molding 140, with the opaque molding 150 preventing the emitted light from escaping the cavity. Polarization selection using the emitted light may then be used in facilitating the quantum random number generation. In this regard, as noted, such polarization selection may be considered quantum in nature, and as such polarization of laser emitted by the VCSEL 110 may be used as the quantum phenomena driving quantum random number generation. To that end, the polarizer 130 may be used in providing the polarization selection applied to the light emitted by the VCSEL 110, with the PD 120 providing the polarization selection based response-e.g., providing indications of the different quantum states in response to detecting (or not) light that is passed by the polarizer 130.

As noted, to further enhance performance, the device 110 may incorporate mechanism(s) and/or feature(s) to allow for mitigating laser feedback. This may be done by, e.g., configuring the polarizer 130 (relative to the other components-namely, the VCSEL 110 and the PD 12) such that it may have optimal positioning and/or orientation. In particular, the polarizer 130 is positioned such that it is between the VCSEL 110 and the PD 120, and oriented such that it is parallel to the PD 120, and at an angle relative to the VCSEL 110. As such, the PD 120 similarly is positioned at an angle relative to the VCSEL 110, as shown in Fig. 1. Such arrangement would allow for providing polarization selection while preventing (or at least reducing) feedback into the VCSEL.

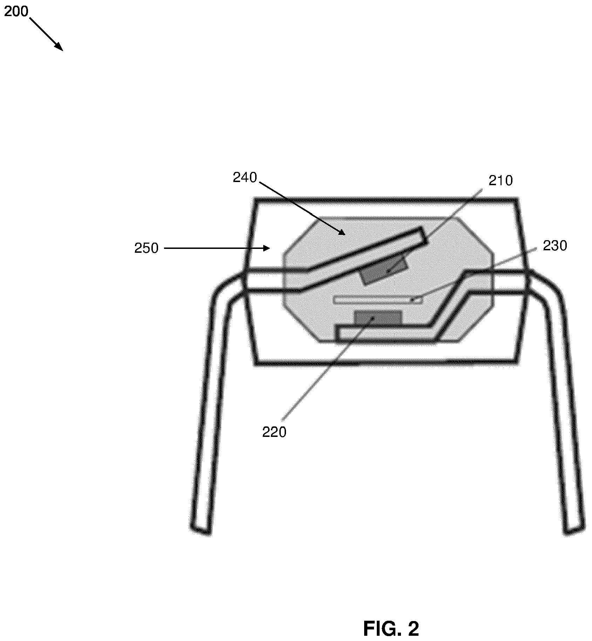

Fig. 2 illustrates another example vertical-cavity surface-emitting laser (VCSEL) based quantum random number generator (QRNG) device. Referring to Fig. 2, there is shown vertical-cavity surface-emitting laser (VCSEL) based quantum random number generator (QRNG) device (referred to hereinafter simply as "device") 200.

The device 200 may be substantially similar to the device 100, and may operate in substantially similar manner. However, the device 200 incorporates an alternative design. In this regard, as illustrated in Fig. 2, the device 200 comprises a VCSEL 210, a photodetector (PD) 220, a polarizer 230, a transparent molding 240, and an opaque molding 250. Each of these components may be substantially similar to the similarly-named components of the device 100, and may operate in a substantially similar manner.

However, as shown in Fig. 2, in the device 200 the position of the VCSEL 210 and the PD 220 are switched, with the PD 220 disposed on the bottom flat surface of the transparent molding 240, and the VCSEL 210 disposed within the transparent molding 240 at an angle relative to the PD 220. As such, to account for the switching of positions of the VCSEL 210 and the PD 220, the position and orientation of the polarizer 230 is adjusted, to maintain the parallel positions relative to the PD 220, as shown in Fig. 2.

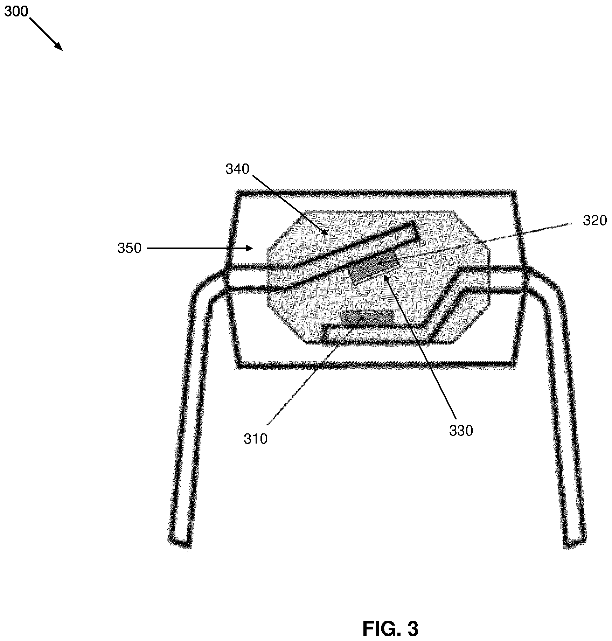

Fig. 3 illustrates another example vertical-cavity surface-emitting laser (VCSEL) based quantum random number generator (QRNG) device. Referring to Fig. 3, there is shown vertical-cavity surface-emitting laser (VCSEL) based quantum random number generator (QRNG) device (referred to hereinafter simply as "device") 300.

The device 300 may be substantially similar to the device 100, and may operate in substantially similar manner. However, the device 300 incorporates an alternative design. In this regard, as illustrated in Fig. 3, the device 300 comprises a VCSEL 310, a photodetector (PD) 320, a polarizer 330, a transparent molding 340, and an opaque molding 350. Each of these components may be substantially similar to the similarly-named components of the device 100, and may operate in a substantially similar manner.

However, the device 300 differs in that it incorporates an integrated photodetector (PD) based design, in which a photodetector (PD) with an integrated polarized element is used. In other words, in the device 300 the polarizer element (the polarizer 330) is integrated directly onto the photodetector element (the PD 320), as shown in Fig. 3. In this regard, as an added step of integration, the polarizer 330 may be fabricated directly onto the PD 320, thus removing the need for the placement of the polarizer within the first molding (e.g., during the first molding process). For example, the polarizer 330 may be fabricated at the wafer level and be part of the photodetector manufacturing process.

As with the other devices, to mitigate feedback related effects, the polarizer element may be positioned and/or oriented to facilitate preventing (or at least reducing) feedback into the VCSEL. As such, the integrated PD/polarizer sub-component (that is, the PD 320 and the integrated polarizer 330) as a whole may be placed at an angle relative to the VCSEL 310, as shown in Fig. 3.

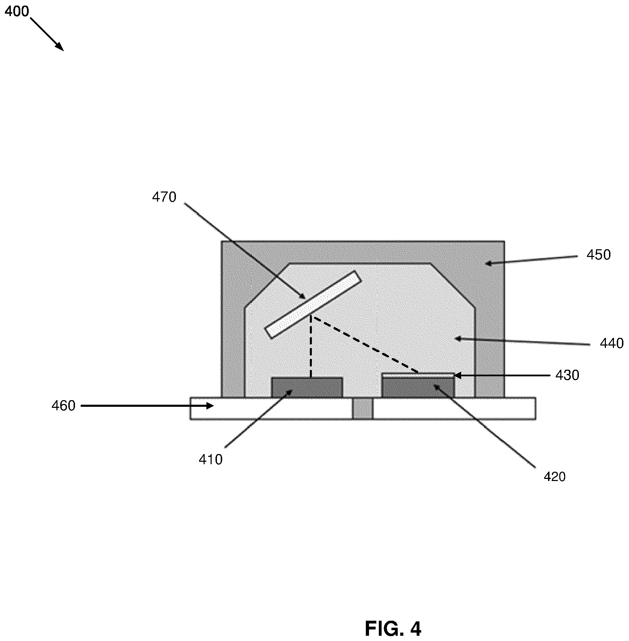

Fig. 4 illustrates another example vertical-cavity surface-emitting laser (VCSEL) based quantum random number generator (QRNG) device. Referring to Fig. 4, there is shown vertical-cavity surface-emitting laser (VCSEL) based quantum random number generator (QRNG) device (referred to hereinafter simply as "device") 400.

The device 400 may be substantially similar to the device 100, and may operate in a substantially similar manner. However, the device 400 incorporates an alternative design. In this regard, as illustrated in Fig. 4, the device 400 comprises a VCSEL 410, a photodetector (PD) 420, a polarizer 430, a transparent molding 440, and an opaque molding 450. Each of these components may be substantially similar to the similarly-named components of the device 100, and may operate in a substantially similar manner. Further, the device 400 may utilize an integrated based design, similar to the device 300, and as such, the polarizer 430 may be integrated directly onto the PD 420.

However, the device 400 utilizes a different design compared to the devices 100, 200, and 300 with respect to the positioning of the main sub-components (the VCSEL, the photodetector, and the polarizer). In particular, rather than positioning some of the sub-components at angle, as done in the devices 100, 200, and 300 where the photodetector and the polarizer sub-components at an angle relative to the VCSEL, to reduce reflections toward the VCSEL (thus preventing or reducing feedback effects), the device 400 incorporate a design in which the all three sub-components (the VCSEL 410, the photodetector (PD) 420, and the polarizer 430) are placed or positioned on the same plane. In this regard, the device 400 may comprise an overmolded lead frame 460 on which or where the VCSEL 410, the photodetector (PD) 420 (with the integrated polarizer 430) are placed, on the same plane, as shown.

Further, a reflective component (e.g., mirror) 470 is used, to facilitate the coupling of the optical beam emitted by the VCSEL 410 in a manner that allows for ensuring the mitigating of feedback effects. For example, the mirror 470 may be placed at an angle, as shown in Fig. 4, to allow for reflecting, at an angle, onto the photodetector (PD) 420 (with the integrated polarizer 430) the beam emitted by the VCSEL 410.

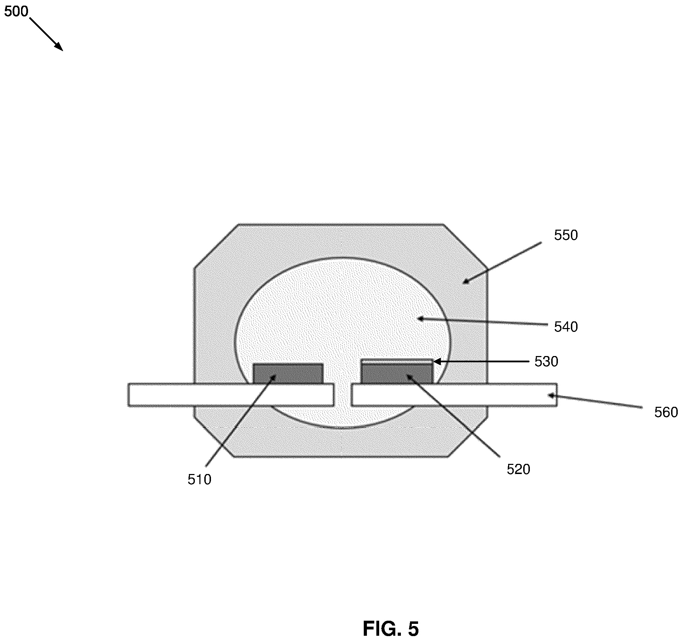

Fig. 5 illustrates another example vertical-cavity surface-emitting laser (VCSEL) based quantum random number generator (QRNG) device. Referring to Fig. 5, there is shown vertical-cavity surface-emitting laser (VCSEL) based quantum random number generator (QRNG) device (referred to hereinafter simply as "device") 500.

The device 500 may be substantially similar to the device 100, and may operate in a substantially similar manner. However, the device 500 incorporates an alternative design. In this regard, as illustrated in Fig. 5, the device 500 comprises a VCSEL 510, a photodetector (PD) 520, and a polarizer 530. Each of these components may be substantially similar to the similarly-named components of the device 100, and may operate in a substantially similar manner. Further, the device 500 may utilize an integrated based design, similar to the device 300, and as such, the polarizer 530 may be integrated directly onto the PD 520.

However, rather than use a two-moldings based design similar to the one used in the devices 100, 200, 300, and 400-comprising a first transparent molding, such as the transparent molding 140, and a second opaque molding around it, such as the opaque molding 150-the device 500 may instead use a simpler, single overmolding based configuration (packaging). In this regard, such configuration may comprise a silicon dispensed dome with a single overmolding over the dome. For example, as shown in Fig. 5, the device 500 comprises a silicon dispensed dome 540 with an overmolding 550 around it. The overmolding 550 may comprise, at least at an interface with the silicon dispensed dome 540, a highly reflective overmolding compound or material, and may be applied via a single overmolding step.

The single overmolding based configuration may have different characteristics compared to the two-moldings based configurations, which create different challenges. For example, single overmolding based configuration similar to the one used in the device 500 may have low signal-to-noise (S/N) charateristics, which may affect performance. Accordingly, devices implemented based on such configuration may need to be adjusted or modified to account for such issues. For example, to account for and mitigate the low signal-to-noise (S/N) ratio, the polarizer may be mounted or fabricated on the photodetector (e.g., the photodiode), and may be configured to rely on the curvature of the silicon dome and scattering of the highly reflective overmolding compound to reduce the feedback into the VCSEL.

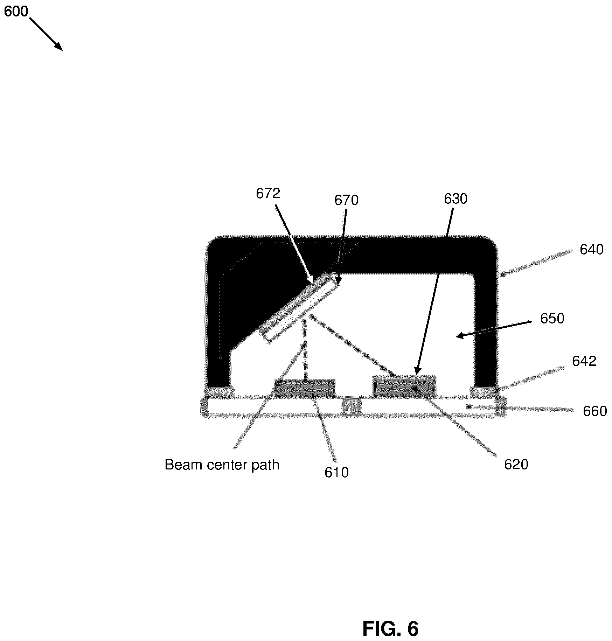

Fig. 6 illustrates another example vertical-cavity surface-emitting laser (VCSEL) based quantum random number generator (QRNG) device. Referring to Fig. 6, there is shown vertical-cavity surface-emitting laser (VCSEL) based quantum random number generator (QRNG) device (referred to hereinafter simply as "device") 600.

The device 600 may be substantially similar to either of the device 100 or the device 500, and may operate in a substantially similar manner. However, the device 600 incorporates an alternative design. In this regard, as illustrated in Fig. 6, the device 600 comprises a VCSEL 610, a photodetector (PD) 620, and a polarizer 630. Each of these components may be substantially similar to the similarly-named components of the device 100, and may operate in a substantially similar manner. Further, the device 600 may utilize an integrated based design, similar to the device 300, and as such, the polarizer 630 may be integrated directly onto the PD 620.

However, rather than use a two-moldings based design similar to the one used in devices 100, 200, 300, and 400, and/or a single overmolding based configuration similar to the one used in the device 500, the device 600 may instead use a housing based configuration. In this regard, such configuration may comprise use of a housing that is bonded (e.g., using adhesive) onto the top of a substrate, on which the main sub-component (the VCSEL, the PD, etc.) are disposed or placed.

For example, as shown in Fig. 6, the device 600 comprises a housing 640 that is bonded onto or otherwise attached to a substrate 660, such as using adhesive 642, with the housing 640 creating a cavity 650 on top of the substrate 660. The housing 640 may comprise opaque material. The substrate 660 may comprise suitable material and/or sub-elements, such as ceramic, lead frame, printed circuit board (PCB), etc. The VCSEL 610 and the PD 620 with the integrated polarizer 630 may be disposed on top of the substrate 660, within the cavity 650.

The device 600 may also incorporate one or more optical routing components to provide or otherwise facilitate the required beam routing between the VCSEL 610 and the PD 620. In this regard, various types and/or techniques may be used. For example, in the embodiment illustrated in Fig. 6, the device 600 may incorporate, within the housing 640, a reflective based optical routing component (e.g., a mirror) 670, which may be attached to the inside of the housing 640, such as using an adhesive 672. The mirror 670 may arranged to provide optimal optical routing (shown as "Beam center path" in Fig. 6), such as by placing the mirror 670 at a pre-determined optimal angle, to enable coupling the beam from the VCSEL 610 to the PD 620.

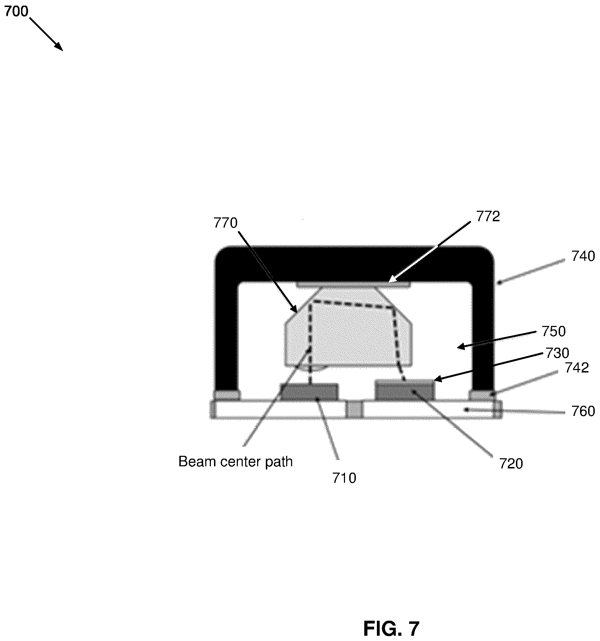

Fig. 7 illustrates another example vertical-cavity surface-emitting laser (VCSEL) based quantum random number generator (QRNG) device. Referring to Fig. 7, there is shown vertical-cavity surface-emitting laser (VCSEL) based quantum random number generator (QRNG) device (referred to hereinafter simply as "device") 700.

The device 700 may be substantially similar to the device 600, and may operate in a substantially similar manner. In this regard, as illustrated in Fig. 7, the device 700 comprises a VCSEL 710, a photodetector (PD) 720, a polarizer 730, a housing 740, a cavity 750, a substrate 760, and an optical routing component 770. Each of these components may be substantially similar to the similarly-named components of the device 600, including the housing 740 and the optical routing component 770 being bonded and/or attached in similar manner using adhesives 742 and 772, and may operate in a substantially similar manner. However, rather than being a mirror, which may require the housing to be formed in an irregular shape to accommodate the attaching of the mirror as illustrated in Fig. 6, the optical routing component 770 may be a non-mirror structure that is configured to route the beam from the VCSEL 710 to the PD 720 within the structure, as shown in Fig. 7.

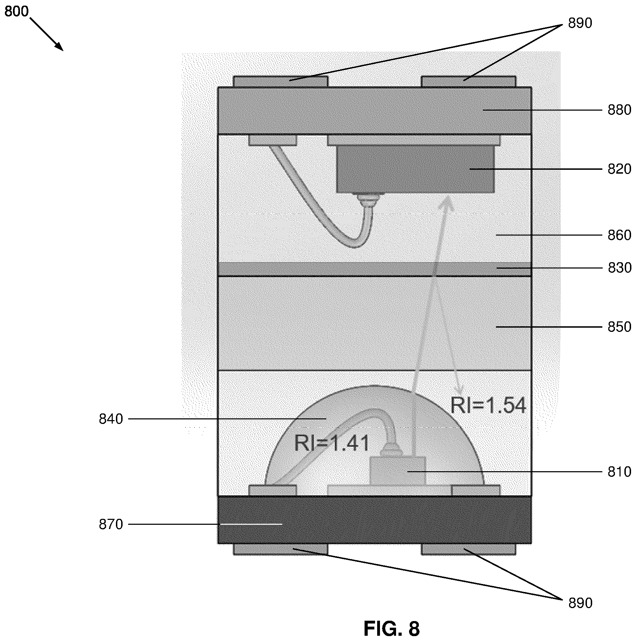

Fig. 8 illustrates stacking-type vertical-cavity surface-emitting laser (VCSEL) based quantum random number generator (QRNG) device. Referring to Fig. 8, there is shown stacking-type VCSEL quantum random number generator (QRNG) device (or simply "device") 800.

The device 800 may be substantially similar to any of the devices 100-700, and may operate in a substantially similar manner. However, the device 800 incorporates an alternative design. In particular, the device 800 may utilize a stacking-type based design, with the different sub-components generally being arranged in the of form of stack of layers, one on top of the other.

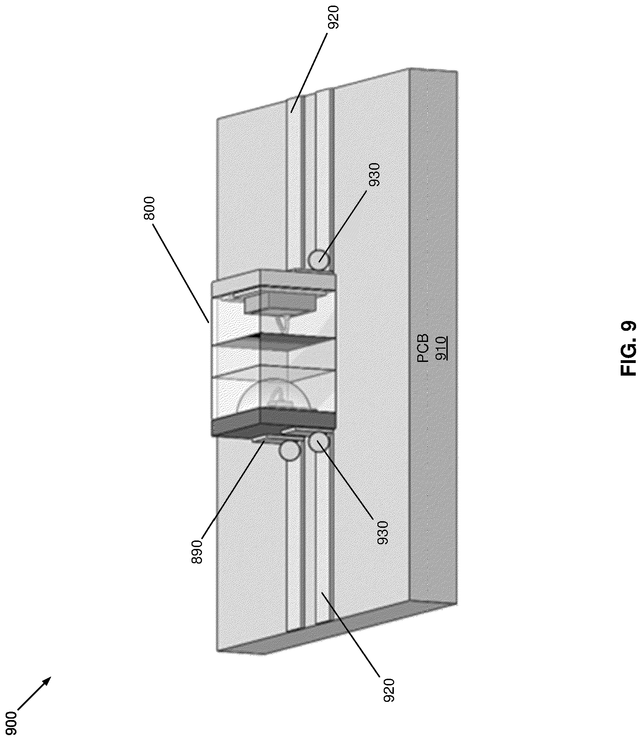

In this regard, as illustrated in Fig. 8, the device 800 comprises a VCSEL 810, a photodetector (PD) 820, a polarizer 830, a silicon dispensed dome 840, a glass layer 850, and a transparent layer 860. These components may be arranged in a stack, with the VCSEL 810 at the bottom, with the silicon dispensed dome 840 engulfing it, followed by the glass layer 850, then the polarizer 830, then the transparent layer 860, and finally the photodetector (PD) 820 on top. In this regard, as illustrated in Fig. 8, the polarizer 830 may be disposed on the interface between the glass layer 850 and the transparent layer 860. However, the disclosure is not limited to such arrangement, and as such in alternative implementations the polarizer 830 may be disposed (fabricated) on other components. For example, the polarizer 830 may be disposed (fabricated) additionally or alternatively on top of the PD 820. Further, the VCSEL 810 may be disposed on the top side of a bottom board 870 whereas the photodetector (PD) 820 may be disposed on the bottom side of a top board 880. The bottom board 870 and the top board 880 may comprise suitable material, such as Bismaleimide-Triazine (BT) resin. Soldering pads 890 may be disposed on the bottom side of the bottom board 870 and on the top side of the top board 880, such when the device 800 is incorporated into a larger device or packaging. This is illustrated in Fig. 9.

The device 800 may be configured for operation based on side-emitting LED technology. As with the devices discussed above, the design used in the device 800 may be modified. For example, for the polarizer 830 a wire grid polarizer (WGP) structure on glass-transparent layer interface (and/or or on top of the PD) may be used.

The desired optical routing may be provided by selection of material that allows for coupling the light source (e.g., the VCSEL 810) to the photodetector (PD) 820 while mitigating the feedback effects. For example, the silicon dispensed dome 840 and layers in the middle may introduce a shift to the emitted beam of the VCSEL. This may be achieved by one or both of physical means (e.g., curvature of the dome surface) and differences of Rl (refractive index) in the material used in the layers (e.g., as illustrated in Fig. 8), which may introduce a small deflection to prevent feedback into VCSEL.

Fig. 9 illustrates an example packaging incorporating a stacking-type vertical-cavity surface-emitting laser (VCSEL) based quantum random number generator (QRNG) device. Shown in Fig. 9 is a packaging 900 incorporating the device 800.

The packaging 900 comprises a printed circuit board (PCB) 910, onto which the device 800 is incorporated. In this regard, as noted above, the device 800 may be configured for operation based on side-emitting LED technology, and as such the device 800 may be incorporated sideway on top of the PCB 910. For example, the device 800 may be incorporated onto the PCB 910 using surface-mount technology (SMT), particularly with the orientation illustrate din Fig. 9. To facilitating the incorporating of the device 800, the PCB 910 may comprise (e.g., on the top side thereof) soldering pads 920, which may be used in connecting the device 800, particularly via the soldering pads 890 of the device 800. In this regard, soldering(s) 930 may be used in connecting the soldering pads 890 of the device 800 and the soldering pads 920 of the PCB 910, as shown in Fig. 9.

In some implementations, packaging used in the proposed QRNG devices (e.g., any of devices 100-800) may also comprise added electronics, with a higher pin count leadframe. Such added electronics may comprise, e.g., one or more of a laser driver to precisely drive the VCSEL within the package, additional sensor electronics, such as an amplifier (e.g., transimpedance amplifier) and a comparator configured to turn the photodiode current into a bit level voltages, and the like.

An example optical device, in accordance with the present disclosure, may be configured for use in quantum random number generation, with the optical device comprising an optical source configured to emit a light beam; a photodetector configured to detect light; and a polarizer disposed between the optical source and the photodetector, where the polarizer is configured to selectively pass light having a particular polarization; where the optical device comprises a packaging that comprises, at least, the optical source, the photodetector, and the polarizer; where the polarizer is configured to selectively pass the light beam when it has a polarization matching the particular polarization; where the optical device comprises one or more mitigating features for mitigating light feedback into the optical source; and where the optical device is configured for use in facilitating or enabling quantum random number generation (QRNG) based on detection of the light beam by the photodetector.

In an example embodiment, the optical source comprises a vertical-cavity surface-emitting laser (VCSEL).

In an example embodiment, the photodetector comprises a photodiode.

In an example embodiment, the polarizer comprises a wire grid polarizer (WGP) structure.

In an example embodiment, the polarizer is integrated onto the photodetector.

In an example embodiment, the polarizer is placed and/or orientated parallel to the photodetector.

In an example embodiment, the one or more mitigating features comprise placing and/or orientating the polarizer in a manner that prevents or reduces feedback into the optical source.

In an example embodiment, the polarizer is placed and/or orientated at an angle that optimizes preventing or reducing feedback into the optical source.

In an example embodiment, the one or more mitigating features comprise an optical routing component configured to provide or otherwise facilitate routing of light from the optical source to the photodetector while preventing or reducing feedback into the optical source.

In an example embodiment, the optical routing component comprises a reflective based optical routing component.

In an example embodiment, the reflective based optical routing component comprises a mirror, where the mirror is placed and/or orientated at an angle that optimizes preventing or reducing feedback into the optical source.

In an example embodiment, the packaging comprises an opto-coupler double molding packaging.

In an example embodiment, the opto-coupler double molding packaging comprises a first molding and a second molding, where the first molding is a transparent molding comprising transparent material, where the second molding is an opaque molding comprising opaque material, where the first molding comprises, at least, the optical source, the photodetector, and the polarizer; and where first molding is, at least partially, disposed within and/or surrounded by the second molding.

In an example embodiment, the packaging comprises a housing based packaging.

In an example embodiment, the housing based packaging comprises a housing defining a cavity, wherein the housing comprises an opaque material, and where the cavity comprises, at least, the optical source, the photodetector, and the polarizer.

In an example embodiment, the packaging comprises single overmolding based packaging.

In an example embodiment, the single overmolding based packaging comprises a silicon dispensed dome and a overmolding, where the silicon dispensed dome comprises, at least, the optical source, the photodetector, and the polarizer; where the silicon dispensed dome is, at least partially, disposed within and/or surrounded by the overmolding; and where the overmolding comprises, at least at an interface with the silicon dispensed dome, highly reflective overmolding compound or material.

In an example embodiment, the optical device further comprises one or more additional electronic components.

In an example embodiment, the one or more additional electronic components comprise one more of a laser driver, an amplifier, and a comparator.

In an example embodiment, the packaging comprises at least one of the one or more additional electronic components.

In an example embodiment, the optical device comprises a stacking-type based structure.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

As utilized herein the terms "circuits" and "circuitry" refer to physical electronic components (e.g., hardware), and any software and/or firmware ("code") that may configure the hardware, be executed by the hardware, and or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may, for example, operate on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not enabled (e.g., by a user-configurable setting, factory trim, etc.).

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Various embodiments in accordance with the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

The present disclosure claims the priority of U.S. application 18/916,610 filed on October 15, 2024. The entire disclosure of this application is hereby explicitly incorporated by reference into the present disclosure.

Implementations disclosed herein may relate to the following: An optical device may be configured for use in quantum random number generation. The optical device may include an optical source configured to emit a light beam; a photodetector configured to detect light; and a polarizer disposed between the optical source and the photodetector, where the polarizer is configured to selectively pass light having a particular polarization. The optical device may include a packaging that includes, at least, the optical source, the photodetector, and the polarizer. The polarizer is configured to selectively pass the light beam when it has a polarization matching the particular polarization. The optical device includes one or more mitigating features for mitigating light feedback into the optical source. The optical device is configured for use in facilitating or enabling quantum random number generation (QRNG) based on detection of the light beam by the photodetector.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:
1. An optical device configured for use in quantum random number generation, the optical device comprising:
   an optical source configured to emit a light beam;
   a photodetector configured to detect light; and
   a polarizer disposed between the optical source and the photodetector, wherein the polarizer is configured to selectively pass light having a particular polarization;
   wherein the optical device comprises a packaging that comprises, at least, the optical source, the photodetector, and the polarizer;
   wherein the polarizer is configured to selectively pass the light beam when it has a polarization matching the particular polarization;
   wherein the optical device comprises one or more mitigating features for mitigating light feedback into the optical source; and
   wherein the optical device is configured for use in facilitating or enabling quantum random number generation (QRNG) based on detection of the light beam by the photodetector.
2. The optical device according to aspect 1, wherein the optical source comprises a vertical-cavity surface-emitting laser (VCSEL).
3. The optical device according to aspect 1, wherein the photodetector comprises a photodiode.
4. The optical device according to aspect 1, wherein the polarizer comprises a wire grid polarizer (WGP) structure.
5. The optical device according to aspect 1, wherein the polarizer is integrated onto the photodetector.
6. The optical device according to aspect 1, wherein the polarizer is placed and/or orientated parallel to the photodetector.
7. The optical device according to aspect 1, wherein the one or more mitigating features comprise placing and/or orientating the polarizer in a manner that prevents or reduces feedback into the optical source.
8. The optical device according to aspect 7, wherein the polarizer is placed and/or orientated at an angle that optimizes preventing or reducing feedback into the optical source.
9. The optical device according to aspect 1, wherein the one or more mitigating features comprise an optical routing component configured to provide or otherwise facilitate routing of light from the optical source to the photodetector while preventing or reducing feedback into the optical source.
10. The optical device according to aspect 9, wherein the optical routing component comprises a reflective based optical routing component.
11. The optical device according to aspect 10, wherein the reflective based optical routing component comprises a mirror, and wherein the mirror is placed and/or orientated at an angle that optimizes preventing or reducing feedback into the optical source.
12. The optical device according to aspect 1, wherein the packaging comprises an opto-coupler double molding packaging.
13. The optical device according to aspect 12, wherein the opto-coupler double molding packaging comprises a first molding and a second molding,
   wherein the first molding is a transparent molding comprising transparent material,
   wherein the second molding is an opaque molding comprising opaque material,
   wherein the first molding comprises, at least, the optical source, the photodetector, and the polarizer; and
   wherein first molding being, at least partially, disposed within and/or surrounded by the second molding.
14. The optical device according to aspect 1, wherein the packaging comprises a housing based packaging.
15. The optical device according to aspect 14, wherein the housing based packaging comprises a housing defining a cavity, wherein the housing comprises an opaque material, and wherein the cavity comprises, at least, the optical source, the photodetector, and the polarizer.
16. The optical device according to aspect 1, wherein the packaging comprises single overmolding based packaging.
17. The optical device according to aspect 16, wherein the single overmolding based packaging comprises a silicon dispensed dome and an overmolding,
   wherein the silicon dispensed dome comprises, at least, the optical source, the photodetector, and the polarizer;
   wherein the silicon dispensed dome is, at least partially, disposed within and/or surrounded by the overmolding; and
   wherein the overmolding comprises, at least at interface with the silicon dispensed dome, highly reflective overmolding compound or material.
18. The optical device according to aspect 1, wherein the optical device further comprises one or more additional electronic components.
19. The optical device according to aspect 18, wherein the one or more additional electronic components comprise one or more of a laser driver, an amplifier, and a comparator.
20. The optical device according to aspect 19, wherein the packaging comprises at least one of the one or more additional electronic components.
21. The optical device according to aspect 1, wherein the optical device comprises a stacking-type based structure.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. An optical device configured for use in quantum random number generation, the optical device comprising:
an optical source configured to emit a light beam;
a photodetector configured to detect light; and
a polarizer disposed between the optical source and the photodetector, wherein the polarizer is configured to selectively pass light having a particular polarization;
wherein the optical device comprises a packaging that comprises, at least, the optical source, the photodetector, and the polarizer;
wherein the polarizer is configured to selectively pass the light beam when it has a polarization matching the particular polarization;
wherein the optical device comprises one or more mitigating features for mitigating light feedback into the optical source; and
wherein the optical device is configured for use in facilitating or enabling quantum random number generation (QRNG) based on detection of the light beam by the photodetector.

2. The optical device according to claim 1, wherein the optical source comprises a vertical-cavity surface-emitting laser (VCSEL).

3. The optical device according to any one of the preceding claims, wherein the photodetector comprises a photodiode.

4. The optical device according to any one of the preceding claims, wherein the polarizer comprises a wire grid polarizer (WGP) structure.

5. The optical device according to any one of the preceding claims, wherein the polarizer is integrated onto the photodetector.

6. The optical device according to any one of claims 1 to 4, wherein the polarizer is placed and/or orientated parallel to the photodetector.

7. The optical device according to any one of the preceding claims, wherein the one or more mitigating features comprise placing and/or orientating the polarizer in a manner that prevents or reduces feedback into the optical source, wherein, optionally, the polarizer is placed and/or orientated at an angle that optimizes preventing or reducing feedback into the optical source.

8. The optical device according to any one of the preceding claims, wherein the one or more mitigating features comprise an optical routing component configured to provide or otherwise facilitate routing of light from the optical source to the photodetector while preventing or reducing feedback into the optical source.

9. The optical device according to claim 8, wherein the optical routing component comprises a reflective based optical routing component, wherein, optionally, the reflective based optical routing component comprises a mirror, and wherein the mirror is placed and/or orientated at an angle that optimizes preventing or reducing feedback into the optical source.

10. The optical device according to any one of the preceding claims, wherein the packaging comprises an opto-coupler double molding packaging, wherein, optionally, the opto-coupler double molding packaging comprises a first molding and a second molding,
wherein the first molding is a transparent molding comprising transparent material,
wherein the second molding is an opaque molding comprising opaque material,
wherein the first molding comprises, at least, the optical source, the photodetector, and the polarizer; and
wherein the first molding is, at least partially, disposed within and/or surrounded by the second molding.

11. The optical device according to any one of the preceding claims 1 to 9, wherein the packaging comprises a housing based packaging, wherein, optionally, the housing based packaging comprises a housing defining a cavity, wherein the housing comprises an opaque material, and wherein the cavity comprises, at least, the optical source, the photodetector, and the polarizer.

12. The optical device according to any one of the preceding claims 1 to 9, wherein the packaging comprises single overmolding based packaging, wherein, optionally, the single overmolding based packaging comprises a silicon dispensed dome and an overmolding,
wherein the silicon dispensed dome comprises, at least, the optical source, the photodetector, and the polarizer;
wherein the silicon dispensed dome is, at least partially, disposed within and/or surrounded by the overmolding; and
wherein the overmolding comprises, at least at interface with the silicon dispensed dome, highly reflective overmolding compound or material.

13. The optical device according to any one of the preceding claims, wherein the optical device further comprises one or more additional electronic components, wherein, optionally, the packaging comprises at least one of the one or more additional electronic components.

14. The optical device according to claim 13, wherein the one or more additional electronic components comprise one or more of a laser driver, an amplifier, and a comparator.

15. The optical device according to any one of the preceding claims, wherein the optical device comprises a stacking-type based structure.
